## Europäisches Patentamt
## European Patent Office
## Office européen des brevets

(19)

(11) Veröffentlichungsnummer: **0 126 201**
**B1**

(12)

# EUROPÄISCHE PATENTSCHRIFT

(45) Veröffentlichungstag der Patentschrift:
**05.08.87**

(51) Int. Cl.⁴: **B 60 K 41/06**

(21) Anmeldenummer: **84100409.6**

(22) Anmeldetag: **17.01.84**

(54) Kontrolleinrichtung für ein von einer Antriebsmaschine über ein abgestuftes Getriebe angetriebenes Fahrzeug.

(30) Priorität: **23.04.83 DE 3314800**

(43) Veröffentlichungstag der Anmeldung:
**28.11.84 Patentblatt 84/48**

(45) Bekanntmachung des Hinweises auf die Patenterteilung:
**05.08.87 Patentblatt 87/32**

(84) Benannte Vertragsstaaten:
**AT CH DE FR GB IT LI NL SE**

(56) Entgegenhaltungen:
**EP - A - 0 007 881**
**EP - A - 0 120 191**
**DE - A - 2 836 082**
**DE - A - 2 852 195**
**DE - A - 3 101 056**
**DE - A - 3 240 236**
**DE - A - 3 246 201**
**FR - A - 2 435 635**

(73) Patentinhaber: **WABCO Westinghouse Fahrzeugbremsen GmbH, Am Lindener Hafen 21 Postfach 91 12 80, D-3000 Hannover 91 (DE)**

(72) Erfinder: **Der Erfinder hat auf seine Nennung verzichtet**

(74) Vertreter: **Schrödter, Manfred et al, WABCO Westinghouse Fahrzeugbremsen GmbH Am Lindener Hafen 21 Postfach 91 12 80, D-3000 Hannover 91 (DE)**

**Beschreibung**

Die Erfindung bezieht sich auf eine Konstrolleinrichtung für ein von einer Antriebsmaschine über ein abgestuftes Getriebe angetriebenes Fahrzeug gemäss dem Oberbegriff des Patentanspruchs 1.

Beim manuellen Schalten eines Getriebes für ein Fahrzeug, insbesondere für ein Strassen-Nutzfahrzeug, kommt es vor, dass das Drehmoment im neu eingelegten Gang nicht ausreicht, um das Fahrzeug in der vor dem Gangwechsel vorhandenen Geschwindigkeit weiterfahren zu lassen. Es muss daher wieder zurückgeschaltet werden. Das Einschätzen und Voraussehen einer solchen Situation durch den Fahrzeug-Führer ist schwierig und ungenau. Falsche Gangwechsel bedeuten jedoch, dass das Fahrzeug unwirtschaftlich, insbesondere mit zu hohem Kraftstoff-Verbrauch gefahren wird.

Die beschriebenen Situationen können auch bei automatisch arbeitenden Getrieben auftreten. Diese Getriebe sind deshalb so ausgelegt, dass nur bei hoher Leistungsreserve geschaltet wird. Dies bedeutet ebenfalls eine unwirtschaftliche Fahrweise.

Die Auswahl des günstigsten Betriebspunktes einer aus einem Motor und einem Getriebe bestehenden Antriebseinheit ist von vielen Faktoren abhängig. Selbst die Definition des «günstigsten Betriebspunktes» ist schwierig, da der Punkt günstigsten Verbrauchs im Kennlinienfeld eines Motors in der Regel nicht der Punkt maximaler Leistung ist. Je nach Anforderungen und äusseren Bedingungen müssen die Gangauswahlkriterien zwischen den verschiedenen als «günstig» eingestuften Betriebspunkten variiert werden.

Die Qualität dieser Kriterien ist entscheidend von der Konstanz der verwendeten Grössen abhängig. Werden beispielsweise Motormomente ermittelt, dann sind diese unter anderem abhängig von der Kraftstoffdichte, von der Höhenlage, in der der Motor betrieben wird, von der Kraftstoffqualität, von der Motortemperatur usw. Werden die Motormomente mit nach theoretischen oder empirischen Methoden ermittelten konstanten Werten verglichen, dann wird das Ergebnis bei Auftreten einer Abweichung eines der vielen Einflussfaktoren einen Fehler aufweisen.

Eine naheliegende Lösung ist es nun, möglichst viele der wichtigsten Einflussgrössen mit eigenen Sensoren zu erfassen und auszuwerten, was einen grossen Aufwand erfordert.

Die Genauigkeit, mit der ein Wert ermittelt wird, ist bei der Ermittlung von Schaltpunkten insbesondere bei mit grossem Last-/Leerverhältnis betriebenen Nutzfahrzeugen von Bedeutung. Sollen beispielsweise die bei konstanter Geschwindigkeit am Fahrzeug auftretenden Fahrwiderstände genau ermittelt werden, dann müssten Grössen wie Veränderungen des Luftwiderstandsbeiwertes $C_w$ durch Aufbauänderungen, Luftdichte, Änderungen der Rollreibung der Reifen auf der Strasse bei unterschiedlichen Reifenprofilen und unterschiedlichem Verschleisszustand, Strassenprofil usw. erfasst werden. Hinzu kommt, dass bestimmte Grössen wie Lagerreibung und Getriebe-Wirkungsgrad sich an Serienfahrzeugen ohne grossen Aufwand nicht ermitteln lassen.

Der Erfindung liegt die Aufgabe zugrunde, genaue Schaltpunkte für ein Fahrzeug-Getriebe zu ermitteln, wobei möglichst wenig Pheripherie-Geräte (Sensoren) eingesetzt werden sollen.

Diese Aufgabe wird von der im Patentanspruch 1 angegebenen Erfindung gelöst. Vorteilhafte Ausführungsbeispiele und Weiterbildungen der Erfindung sind in den Unteransprüchen angegeben.

Die Merkmale a) bis d) von Anspruch 1 sind bereits in der älteren EP-A-120 191 enthalten.

Die Erfindung geht von der folgenden Erkenntnis aus: Zu jedem beliebigen Zeitpunkt setzt sich das fahrzeugantreibende momentane Antriebsmoment $M_A$ zusammen aus einem stationären Antriebsmoment $M_{stat}$, dass zur Weiterfahrt des Fahrzeugs ohne Beschleunigung oder Verzögerung des Fahrzeugs erforderlich ist, und einem eine Beschleunigung oder Verzögerung des Fahrzeugs bewirkenden Beschleunigungsmoment $M_b$. Dies bedeutet, dass das stationäre Antriebsmoment $M_{stat}$ wie folgt berechnet werden kann:

$$M_A = M_{stat} + M_b$$
$$M_b = G \cdot f (\ddot{s})$$
$$M_{stat} = M_A - G \cdot f (\ddot{s}),$$

wenn die Grössen $M_A$, G und s vorliegen bzw. gemessen werden können. Im einzelnen bedeuten in den Gleichungen:

$M_{stat}$ = stationäres Anstriebsmoment
$M_A$ = momentanes Antriebsmoment
$M_b$ = Beschleunigungsmoment
G = Gewicht des Fahrzeugs
$\ddot{s}$ = Bescheunigung des Fahrzeugs

Der Ausdruck f $(\ddot{s})$ bedeutet, dass die Fahrzeug-Beschleunigung mit einem Faktor versehen sein kann. Alle Grössen können aus den tatsächlichen Werten abgeleitet sein.

Das stationäre Moment $M_{stat}$ kann als die Summe der Fahrwiderstände bei geschwindigkeitskonstanter Fahrt aufgefasst werden. Diese Fahrwiderstände sind die Rollreibung, die Luftreibung und der Steigungswiderstand.

Da die in der Formel für $M_{stat}$ stehenden Grössen leicht ermittelt werden können, lässt sich die umständliche und ungenaue Erfassung der einzelnen Fahrwiderstände umgehen.

Das zur Auswertung der Gleichung für $M_{stat}$ notwendige genaue Fahrzeug-Gewicht kann über die Fahrzeug-Beschleunigung, wie in der älteren EP-A-111 636 beschrieben, bestimmt werden. Wesentlich ist, dass das genaue Gewicht bekannt ist, und nicht von einem angenommenen Fahrzeuggewicht ausgegangen wird (DE-A 3 018 032, DE-A 3 101 056).

Weiterhin wird nach der erfindungsgemässen Ausgestaltung für die Berechnung möglichst aller erforderlichen Grössen von einmal festgelegten Werten ausgegangen.

Im vorgeschlagenen Fall wird das unter bestimmen Betriebsbedingungen ermittelte Kennlinienfeld des verwendeten Motors, in dem Motorausgangsmoment über Motordrehzahl bei verschiedenen Motorsteuerbetriebspunkten aufgetragen sind, in einem Speicher abgelegt. Die theoretisch oder empirisch ermittelten Schwellwerte $M_{opt}$, die zur Erstellung von Schaltkriterien mit beispielsweise dem Wert $M_{stat}$

verglichen werden, beziehen sich ebenfalls auf die Werte des gespeicherten Kennlinienfeldes. Diese Vorgehensweise hat den Vorteil, dass sich bei Veschiebungen des Kennlinienfeldes z.B. durch veränderte Kraftstoffdichte oder veränderter Höhenlage, das Verhältnis der Grössen bei den beschriebenen Wertevergleichen nicht ändert und somit fehlerfreie Werte geliefert werden.

Würde das Motormoment beispielsweise direkt gemessen und mit theoretisch oder empirisch festgelegten Werten verglichen werden, dann müsste bei Veränderungen des Motormomentes durch äussere Einflüsse eine Korrektur der Werte vorgenommen werden, um ein fehlerfreies Ergebnis zu bekommen.

Ein Vergleich von theoretisch oder empirisch ermittelten Momenten mit dem stationären Moment $M_{stat}$ mit vorgegebenen Werten hat folgenden Vorteil:

Wenn vor dem Einlegen eines neuen Ganges geprüft wird, ob das im neuen Gang erzielbare maximale oder unter Berücksichtigung vorgegebener Auswahlkriterien (z.B. Kraftstoff-Verbrauch) als angemessen zu betrachtende Antriebsmoment grösser ist als das entsprechend dem Getriebe-Übersetzungsverhältnis transformierte stationäre Antriebsmoment, so lässt sich vorher sagen, wie sich das Fahrzeug nach einem Gangwechsel weiterbewegen wird, d.h. ob es sich überhaupt mit der vor dem Gangwechsel vorhandenen Geschwindigkeit und mit einem wirtschaftlichen Kraftstoff-Verbrauch weiter bewegt. Gegebenenfalls wird über eine Sperreinrichtung das Einlegen eines insofern ungünstigen Ganges verhindert.

Der erwähnte Vergleich zwischen dem transformierten stationären Antriebsmoment und dem angemessenen Antriebsmoment des neuen Ganges lässt auch eine Vorhersage über die evtl. zu erwartende Beschleunigung des Fahrzeugs nach dem Gangwechsel zu.

Unter dem Motor-Kennlinienfeld sind auch Kennlinienfelder zu verstehen, die den Betriebszustand des Motors indirekt beschreiben, wie beispielsweise die Zahlenwerte der Kraftstoffeinspritzzeiten.

Weiterhin sind unter den in den Patentansprüchen verwendeten «Momenten» auch Antriebsgrössen allgemein zu verstehen, also zum Beispiel auch Leistungsgrössen oder solche vergleichbaren Grössen, die die Antriebsmomente als eine von mehreren Rechengrössen enthalten.

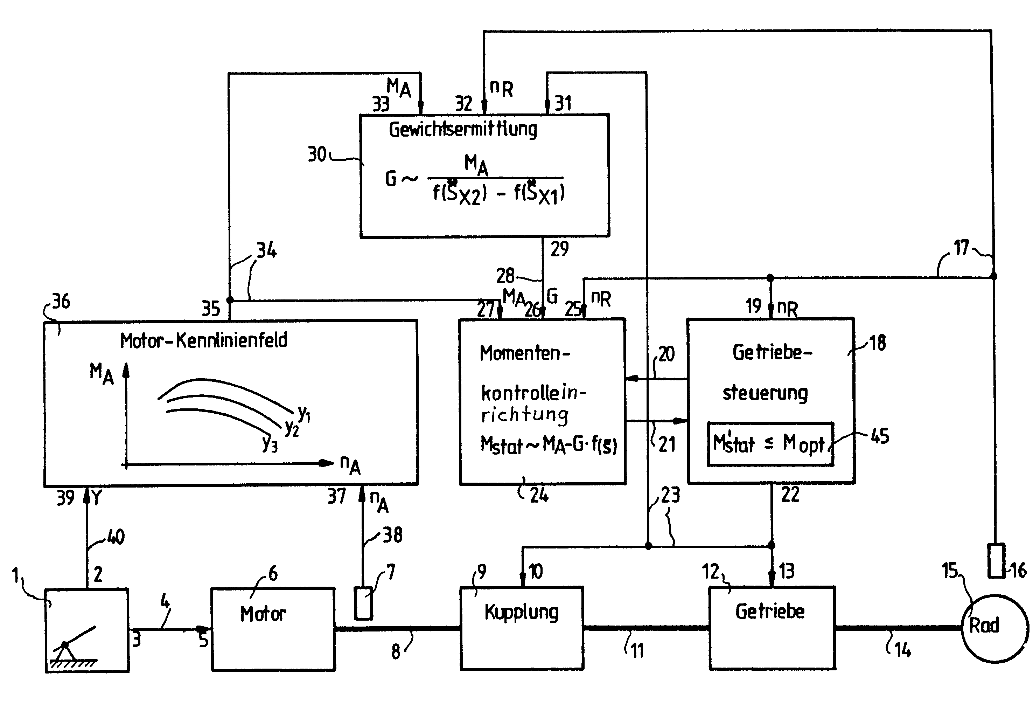

Die Erfindung wird anhand eines Ausführungsbeispiels, das in der Zeichnung dargestellt ist, näher erläutert.

Die Zeichnung zeigt in vereinfachter Darstellung die wesentlichen Elemente eines von einer Antriebsmaschine angetriebenen Fahrzeugs. Als Antriebsmaschine dient ein Verbrennungsmotor 6, dessen Kraftstoffzufuhr mittels eines Gebers 1 steuerbar ist. Über eine Welle 8 ist der Motor 6 mit einer Kupplung 9 verbunden, die ihrerseits über eine Welle 11 mit einem Getriebe 12 verbunden ist. Das Getriebe 12 dient zum Antrieb einer Achse 14, die ihrerseits die angetriebenen Fahrzeugräder des Fahrzeugs antreibt. Von den angetriebenen Rädern des Fahrzeugs ist der Einfachheit halber nur das Rad 15 dargestellt.

Der Geber 1 für die Steuerung der Kraftstoffzufuhr des Motors 6 weist einen Signalausgang 3 auf, der über eine Signalleitung 4 mit einem Signaleingang 5 des Motors 6 verbunden ist. Der Geber 1 ist ferner mit einer Einrichtung versehen, die die Stellung des Gebers 1 als Signalgrösse Motor-Steuergrösse y darstellt. Diese Signalgrösse y ist an einem Signalausgang 2 des Gebers 1 abrufbar. Im einfachsten Fall enthält der Geber 1 als Steuerglied für die Kraftstoffzufuhr des Motors 6 ein übliches, mechanisch arbeitendes Gaspedal. Der Geber 1 kann jedoch auch — wie im dargestellten Ausführungsbeispiel — als elektrischer oder elektronischer Geber ausgebildet sein, wenn der Motor 6 entsprechend mittels eines Steuersignals steuerbar ist.

Die zwischen der antriebsseitigen Welle 8 und der abtriebsseitigen Welle 11 angeordnete Kupplung 9 ist mittels eines Steuersignals betätigbar, das einem Signaleingang 10 der Kupplung 9 zuführbar ist.

Das Getriebe 12 ist ebenfalls elektrisch steuerbar, wobei Signaleingänge 13 des Getriebes 12 zum Empfang entsprechender Steuersignale zum Einlegen des jeweils gewünschten oder erforderlichen Ganges dienen. Sowohl die Kupplung 9 als auch das Getriebe 12 können im einfachsten Fall rein mechanisch betätigt werden. In diesem Fall stellen die Signaleingänge 10 und 13 symbolhaft die Verbindung von Kupplungs-Betätigungsmechanismen und Getriebe-Betätigungsmechanismen mit den entsprechenden Betätigungseinrichtungen für die Kupplung 9 und das Getriebe 12 dar.

Zur Steuerung des Getriebes 12 ist eine Getriebesteuerung 18 vorgesehen. Im einfachsten Fall arbeitet diese Getriebesteuerung 18 so, dass das Getriebe 12 in Abhängigkeit von der Geschwindigkeit des Fahrzeugs und somit in Abhängigkeit von der Drehzahl $n_R$ der angetriebenen Räder automatisch geschaltet wird. Zur Erfassung der Drehzahl $n_R$ des antriebenen Rades 15 dient ein Sensor 16, dessen Drehzahl-Signal über eine Signalleitung 17 einem Signaleingang 19 der Getriebesteuerung 18 zugeführt ist. Über Signalausgänge 22 und entsprechende Signalleitungen 23 ist die Getriebesteuerung 18 mit den Signaleingängen 13 des Getriebes 12 und dem Signaleingang 10 der Kupplung 9 verbunden.

Wenn mittels der Getriebesteuerung 18 in Abhängigkeit von der Geschwindigkeit des Fahrzeugs und unter Berücksichtigung vorgegebener Auswahlkriterien ein neuer Gang festgelegt wird, wird die Kupplung 9 über ihren Signaleingang 10 betätigt und anschliessend bei getrennter Kupplung das Getriebe 1 über seine Signaleingänge 13 von der Getriebesteuerung 18 umgeschaltet. Danach wird dann die Kupplung 9 wieder geschlossen. Die Steuerung bzw. Betätigung der Kupplung 9 und des Getriebes 12 können — wie oben angedeutet — auch rein mechanisch über Servomotoren der Gestriebesteuerung 18 erfolgen.

Zu den vorstehend erwähnten Auswahlkriterien, nach denen in der Getriebesteuerung 18 jeweils ein neuer Gang festgelegt wird, gehört im dargestellten Ausführungsbeispiel eine Überprüfung, ob der Motor 6 nach dem Einlegen des an sich ausgewählten neuen Ganges in der Lage ist, das für eine Weiterfahrt des Fahrzeugs ohne Verzögerung oder Beschleunigung erforderliche stationäre Antriebsmoment aufzubringen. Dies bedeutet, dass der dem an sich ausgewählten neuen Gang zugeordnete Antriebsmomenten-Bereich oder ein entsprechendes optimales oder angemessenes Antriebsmoment $M_{opt}$ grössere Werte bzw. einen grösseren Wert aufweisen müssen als das für die verzögerungs- bzw. beschleunigungsfreie Weiterfahrt des Fahrzeugs erforderliche stationäre Antriebsmoment $M_{stat}$. Das dem an sich ausgewählten neuen Gang zugeordnete optimale Antriebsmoment $M_{opt}$ kann z.B. auch zusätzlich unter Berücksichtigung des Kraftstoffverbrauchs bestimmt sein.

Für den erwähnten Vergleich zwischen dem jeweiligen stationären Antriebsmoment $M_{stat}$ und dem für den an sich ausgewählten neuen Gang optimalen Antriebsmoment $M_{opt}$ ist eine Vergleichseinrichtung 45 vorgesehen, die in die Getriebesteuerung 18 integriert ist. Ebenfalls in die Getriebesteuerung 18 integriert ist eine Einrichtung, die zur Speicherung oder rechnerischen Bestimmung der den einzelnen Gängen des Getriebes 12 zugeordneten angemessenen bzw. optimalen Antriebsmomente $M_{opt}$ dient. Es versteht sich, dass bei dem erwähnten Vergleich der Antriebsmomente nicht das jeweilige stationäre Antriebsmoment direkt mit dem angemessenen Antriebsmoment des betreffenden neuen Ganges verglichen wird, sondern dass bei diesem Vergleich das stationäre Antriebsmoment entsprechend dem Übersetzungsverhältnis zwischen dem jeweils eingeschalteten und dem betreffenden neuen Gang transformiert wird. Aus diesem Grunde ist im dargestellten Ausführungsbeispiel als Vergleichsgrösse $M'_{stat}$ statt $M_{stat}$ angegeben. Es ist auch möglich, statt des stationären Antriebsmomentes bzw. dem gemäss dem Übersetzungsverhältnis des Getriebes tranformierten Wert andere, von den Antriebsmomenten abgeleitete Grössen wie z.B. Kräfte, Leistungen oder solche Vergleichsgrössen, die die Antriebsmomente lediglich als eine von mehreren Rechengrössen enthalten, miteinander zu vergleichen.

Alle optimalen oder angemessenen Antriebsmomente $M_{opt}$ oder $M'_{opt}$ beziehen sich immer auf die im Kennlinienfeldspeicher 36 abgelegten Werte. Für die Berechnung oder Bestimmung des stationären Antriebsmomentes oder einer daraus abgeleiteten stationären Antriebsgrösse ist eine Momenten-Kontrolleinrichtung 24 vorgesehen, die die für den oben erwähnten Vergleich erforderliche stationäre Antriebsgrösse (z.B. $M_{stat}$ oder $M'_{stat}$) über Signalleitungen 21 an die Getriebestellung 18 liefert, sofern die Getriebesteuerung 18 über Abfrage- Signalleitungen 20 die entsprechende Grösse abfragt. Damit ist gewährleistet, dass die Getriebesteuerung 18 nach der Auswahl eines oder mehrerer gemäss der Drehzahl $n_R$ des Rades 15 an sich zulässiger neuer Gänge für jeden dieser Gänge den Vergleich zwischen dem erforderlichen stationären Antriebsmoment und dem dem betreffenden neuen Gang angemessenen Antriebsmoment vornimmt. Das Ergebnis dieses Vergleichs ist dann, dass der z.B. verbrauchsgünstigste neue Gang ausgewählt wird, der das Fahrzeug in jedem Fall so antreibt, dass es wenigstens ohne nennenswerte Verzögerung weiterfährt, oder dass kein neuer Gang eingelegt wird, weil in keinem der an sich ausgewählten neuen Gänge eine Weiterfahrt des Fahrzeugs ohne nennenswerte Verzögerung gewährleistet ist.

In der Momenten-Kontrolleinrichtung 24 wird das jeweilige Antriebsmoment $M_{stat}$ dadurch bestimmt, dass die Differenz zwischen dem tatsächlichen vom Motor 6 aufgebrachten jeweiligen momentanen Antriebsmoment $M_A$ des Fahrzeugs und einer solchen Rechengrösse bestimmt wird, die sich als das Produkt aus dem Gewicht des Fahrzeugs und dem Rechenwert der momentanen Beschleunigung des Fahrzeugs ergibt. Um die erwähnte Differenz berechnen zu können, werden der Momenten-Kontrolleinrichtung 24 über einen Signaleingang 27 das transformierte momentane Antriebsmoment $M_A$ des Motors 6, über einen Signaleingang 26 das Gewicht G des Fahrzeugs und über einen Signaleingang 25 die Drehzahl $n_R$ des angetriebenen Rades 15 zugeführt.

Der Siganleingang 27 der Momenten-Kontrolleinrichtung 24 ist über eine Leitung 34 an den Signalausgang 35 eines Motor-Kennfeldspeichers 36 angeschlossen, der an dem erwähnten Signalausgang 35 ein dem momentanen Antriebsmoment des Motors 6 entsprechendes Signal zur Verfügung stellt. Der Signaleingang 26 der Momenten-Kontrolleinrichtung 24 ist über eine Signalleitung 28 an einen Signalausgang 29 einer Auswerteeinrichtung (Gewichtsermittlung) 30 zur Ermittlung des Gewichts des Fahrzeugs angeschlossen. An diesem Signalausgang 29 der Auswerteeinrichtung 30 steht ein dem Gewicht des Fahrzeugs entsprechendes Signal zur Verfügung. Der Signaleingang 25 der Momenten-Kontrolleinrichtung 24 ist über die Signalleitung 17 mit dem Sensor 16 zur Erfassung der Rad-Drehzahl $n_R$ verbunden. In der Momenten-Kontrolleinrichtung 24 wird durch Differenzierung aus dem zeitlichen Verlauf der Drehzahl $n_R$ des Rades 15 die Beschleunigungsgrösse $\ddot{s}$ des Fahrzeugs berechnet. Das jeweilige momentane Antriebsmoment $M_A$ des Motors 6 wird aus dem Motor-Kennfeldspeicher 36 ermittelt, welches die Abhängigkeit der folgenden Grössen voneinander enthält: momentanes Antriebsmoment $M_A$ des Motors 6, Drehzahl $n_A$ des Motors 6 und Steuergrösse y des Gebers (Gaspedal) 1. Im dargestellten Ausführungsbeispiel enthält der Speicher 36 für verschiedene Werte ($y_1$, $y_2$, $y_3$) der Steuergrösse y des Gebers 1 je eine Kennlinie für die Abhängigkeit des momentanen Antriebsmomentes $M_A$ von der Drehzahl $n_A$.

Die Steuergrösse y des Gebers 1 wird einem Signaleingang 39 des Speichers 36 über eine Signalleitung 40 zugeführt, die ihrerseits an den Signalausgang 2 des Gebers 1 angeschlossen ist. Die Drehzahl $n_A$ des Motors 6 wird mittels eines die Welle 8 abtastenden Sensors 7 ermittelt und über eine Signalleitung 38 einem Signaleingang 37 des Speichers 36 zugeführt, der so ausgebildet ist, dass er für jedes Wertepaar $y/n_A$ das momentane Antriebsmoment $M_A$ an seinem Signalausgang 35 zur Verfügung stellt. Die Drehzahl $n_A$ des Motors 6 kann auch aus der Rad-Drehzahl $n_R$ des Rades 15 berechnet werden, wenn das jeweilige Übersetzungsverhältnis des Getriebes 12 berücksichtigt wird.

In der bereits in der älteren EP-A-111 636 beschriebenen Gewichtsermittlung 30 zur Ermittlung des Gewichtes des Fahrzeugs wird das Verhältnis zwischen dem momentanen Antriebsmoment $M_A$ des Motors 6 und einer Differenz zweier Rechengrössen gebildet, wobei die erwähnten Rechengrössen jeweils eine der Beschleunigung des Fahrzeugs entsprechende Beschleunigungsgrösse enthalten. Diese beiden Beschleunigungsgrössen $\ddot{s}_{x2}$ und $\ddot{s}_{x1}$ werden zu verschiedenen Zeiten ermittelt, wobei die eine Beschleunigungsgrösse zu einem Zeitpunkt ermittelt wird, in dem sich das Fahrzeug in einem antriebslosen Zustand, z.B. in einer Schaltpause, befindet. In diesem antriebslosen Zustand wird das Fahrzeug nicht wesentlich beschleunigt oder verzögert.

Um die erwähnte Rechenoperation durchführen zu können, wird der Gewichtsermittlung 30 über die Signalleitung 34 und einem Signaleingang 33 das momentane Antriebsmoment $M_A$ des Motors 6 zugeführt. Der zur Bildung der Beschleunigungsgrössen $\ddot{s}_{x2}$ und $\ddot{s}_{x1}$ erforderliche zeitliche Verlauf der Drehzahl $n_R$ des angetriebenen Rades 15 wird über die Signalleitung 17 einen Signaleingang 32 der Gewichtsermittlung 30 zugeführt. Über die Signalleitungen 23 wird einem Signaleingang 31 der Gewichtsermittlung 30 der Zeitpunkt mitgeteilt, zu dem die Kupplung 9 durch Steuersignale dem Antrieb durch den Motor 6 unterliegt bzw. nicht unterliegt. Zu diesen unterschiedlichen Zeiten werden auch die Beschleunigungsgrössen $\ddot{s}_{x2}$ und $\ddot{s}_{x1}$ gemessen bzw. bestimmt.

Die allgemeine Formel zur Ermittlung des Fahrzeuggewichtes G lautet:

$$G = \frac{M_{A1} - M_{A2}}{f(\ddot{s}_{x1}) - f(\ddot{s}_{x2})}$$

Werte mit Index 1 sind zum Zeitpunkt 1 und Werte mit Index 2 sind zum Zeitpunkt 2 ermittelt.

Neben dem oben beschriebenen Sonderfall $M_{A2} = 0$, der für die Schaltpause gilt, kann auch der Sonderfall $f(\ddot{s}_{x2}) = 0$ ausgewertet werden. Dieser gilt für unbeschleunigte Fahrt.

Die obige Gleichung kann auch allgemein, ohne die Sonderfälle abzuwarten, ausgewertet werden. Dabei ist darauf zu achten, dass die beiden Messpunkte nicht zu weit auseinander liegen. Um jedoch eine ausreichende Genauigkeit für die Gewichtsgrösse zu erhalten, sollte die Differenz der Antriebsmomente $M_{A1} - M_{A2}$ möglichst gross gewählt werden.

Die Gewichtsermittlung 30 kann auch so ausgebildet sein, dass verschiedene ermittelte Gewichtsgrössen G zur Bildung eines Mittelwertes für die Gewichtsgrössen verwendet werden und dass dieser Mittelwert zur Anzeige oder Bestimmung des Gewichtes des Fahrzeugs herangezogen wird. In diesem Fall wird also der Momenten-Kontrolleinrichtung 24 ein Gewichts-Mittelwert zugeführt.

Es können auch Mittel vorgesehen sein, die nur solche Gewichtsgrössen oder nur solche Mittelwerte der Gewichtsgrössen zur Auswertung kommen lassen, die eine vorgegebene Abweichung von einem vorgegebenen Wert oder einem früher ermittelten Wert der Gewichtsgrössen nicht überschreiten.

Um sicherzustellen, dass auch dann, wenn in der Auswerteeinrichtung 30 z.B. wegen zu kurzer Fahrzeit noch kein ausreichend genauer Wert für die Gewichtsgrösse G vorliegt, in der Momenten-Kontrolleinrichtung 24 ein brauchbarer Wert für das stationäre Antriebsmoment $M_{stat}$ bestimmt werden kann, ist es vorteilhaft, statt der von der Auswerteeinrichtung 30 ermittelten Gewichtgrössen G zunächst eine mittlere Gewichtsgrösse $G_0$ zu verwenden, die z.B. einem halbbeladenen Fahrzeug entspricht.

Für eine sichere Bestimmung und Berechnung der Gewichtsgrösse G eignet sich in vorteilhafter Weise ein in der Gewichtsermittlung 30 vorgesehener Mikrocomputer, mit dem insbesondere auch die zeitabhängigen Rechenvorgänge bezüglich der Beschleunigungsgrössen auf einfache Weise realisiert werden können.

## Patentansprüche

1. Kontrolleinrichtung für ein von einem Motor über ein die Übersetzung vorzugsweise stufenweise variierendes Getriebe angetriebenes Fahrzeug mit folgenden Merkmalen:

a) es ist ein Motor-Kennfeldspeicher (36) zur Ermittlung des vom Motor (6) abgegebenen momentanen Antriebsmomentes $M_A$ vorgesehen;

b) es ist ein die Drehzahl $n_R$ wenigstens eines Fahrzeugrades (15) erfassender Sensor (16) vorgesehen, dessen Ausgangssignal einer Differenziereinrichtung zur Bestimmung einer aus dem zeitlichen Verlauf der Drehzahl des Fahrzeugrades (15) abgeleiteten Beschleunigungsgrösse $\ddot{s}$ zugeführt ist;

c) es ist eine Gewichtsermittlung (30) zur Berechnung des Fahrzeuggewichts unter Zuhilfenahme des momentanen Antriebsmomentes $M_A$ und der Beschleunigungsgrösse $\ddot{s}$ vorgesehen;

d) es ist eine Momenten-Kontrolleinrichtung (24) zur Berechnung eines stationären Momentes $M_{stat}$, das zur beschleunigungslosen Fahrt erforderlich ist, unter Zuhilfenahme des momentanen Momentes $M_A$, des Fahrzeuggewichts G und der Beschleunigungsgrösse $\ddot{s}$ vorgesehen;

e) es ist eine Getriebesteuerung (18) vorgesehen, die zur Speicherung oder Bestimmung von Schwellwerten von optimalen Antriebsmomenten $M_{opt}$ dient, die unter Anwendung vorgegebener Auswahlkriterien für die verschiedenen Gänge des Getriebes als angemessen vorgegeben sind;

f) es ist eine Vergleichseinrichtung (45) vorgesehen, die zum Vergleich des jeweiligen stationären Antriebsmomentes $M_{stat}$ mit dem optimalen Antriebsmoment $M_{opt}$ des gleichen oder eines anderen Ganges dient.

2. Kontrolleinrichtung nach Anspruch 1, gekennzeichnet durch folgende Merkmale:

a) es ist ein die Drehzahl $n_A$ des Motors (6) erfassender Sensor (7) vorgesehen;

b) es ist ein Geber (1) zur Erzeugung einer Motor-Steuergrösse y vorgesehen;

c) der Motor-Kennfeldspeicher (36) enthält eine Kennlinienschar, die die gegenseitige Abhängigkeit von Motor-Drehzahl $n_A$, Motor-Steuergrösse y und momentanem Moment $M_A$ wiedergibt;

d) ein Signalausgang (35) des Motorfeldspeichers (36) ist mit einem dem momentanen Moment $M_A$ zugeordneten Signaleingang (27) der Momenten-Kontrolleinrichtung (24) verbunden.

3. Kontrolleinrichtung nach Anpruch 2 für ein Fahrzeug, mit einem als Brennkraftmaschine ausgebildeten Motor (6), der über ein Gaspedal gesteuert wird, dadurch gekennzeichnet, dass der Geber (1) als Gaspedal ausgebildet ist.

4. Kontrolleinrichtung nach wenigstens einem der Ansprüche 1 bis 3, dadurch gekennzeichnet, dass

a) die Gewichtsermittlung (30) unter Verwertung des momentanen Momentes $M_A$ und mehrerer, zu verschiedenen Zeitpunkten $X_1$, $X_2$ ermittelter Werte der Fahrzeug-Beschleunigungsgrösse $\ddot{s}$ eine dem Gewicht des Fahrzeugs entsprechende Gewichtsgrösse G nach der Formel:

$$G = \frac{M_A}{f(\ddot{s}_{X2}) - f(\ddot{s}_{X1})}$$

ermittelt, wobei

b) wenigstens einer der von der Gewichtsermittlung (30) zu verwertenden Werte der Beschleunigungsgrösse $\ddot{s}$ zu einem Zeitpunkt ermittelt wird, in dem das Fahrzeug dem Antrieb durch den Motor (6) unterliegt, und wobei wenigstens einer der von der Gewichtsermittlung (30) zu verwertenden Werte der Beschleunigungsgrösse $\ddot{s}$ zu einem Zeitpunkt ermittelt wird, in dem sich das Fahrzeug in einem antriebslosen Zustand befindet.

5. Kontrolleinrichtung nach wenigtens einem der Ansprüche 1 bis 4 für ein Fahrzeug mit einer Kupplung zur Trennung der angetriebenen Fahrzeugräder vom Antriebsstrang des Fahrzeugs, gekennzeichnet durch folgende Merkmale:

a) die Kupplung (9) ist mit einem Steuereingang (10) zum Steuern der Kupplungsbetätigung versehen;

b) der Steuereingang der Kupplung (9) ist mit einem Steuerausgang (22) der Getriebesteuerung (18) verbunden;

c) die Getriebesteuerung (18) erzeugt dann ein Steuersignal zur Trennung der Kupplung (9), wenn der dem antriebslosen Zustand des Fahrzeugs zugeordnete Wert der Beschleunigungsgrösse $\ddot{s}$ ermittelt wird.

6. Kontrolleinrichtung nach Anspruch 4, dadurch gekennzeichnet, dass die Ermittlung der Gewichtsgrösse G wiederholt vorgenommen wird.

7. Kontrolleinrichtung nach Anspruch 6, dadurch gekennzeichnet, dass verschiedene ermittelte Gewichtsgrössen G zur Bildung eines Mittelwertes für die Gewichtsgrösse G verwendet werden und dass dieser Mittelwert zur Anzeige oder Bestimmung des Gewichts des Fahrzeugs herangezogen wird.

8. Kontrolleinrichtung nach Anspruch 6 und 7, dadurch gekennzeichnet, dass Mittel vorgesehen sind, die nur solche Gewichtsgrössen G oder nur solche Mittelwerte der Gewichtsgrössen G zur Auswertung kommen lassen, die eine vorgegeben Abweichung von einem vorgegebenen Wert oder einem früher ermittelten Wert der Gewichtsgrössen G nicht überschreiten.

9. Kontrolleinrichtung nach Anspruch 6 bis 8, dadurch gekennzeichnet, das insbesondere nach einer Veränderung des Fahrzeuggewichts für die erste Ermittlung der Gewichtsgrössen G ein festgelegter vorgegebener Wert der Gewichtsgrösse G herangezogen wird.

10. Kontrolleinrichtung nach wenigstens einem der Ansprüche 1 bis 9, dadurch gekennzeichnet, dass die Momenten-Kontrolleinrichtung (24) eine Recheneinrichtung zur Berechnung der Differenz zwischen dem momentanen Antriebsmoment $M_A$ und dem Produkt aus Gewicht G und Beschleunigungsgrösse $\ddot{s}$ nach der Formel:

$$M_{stat} = MA - G \cdot f(\ddot{s})$$

enthält.

11. Kontrolleinrichtung nach wenigstens einem der Ansprüche 1 bis 10, dadurch gekennzeichnet, dass das stationäre Antriebsmoment $M_{stat}$ ständig ermittelt wird.

12. Kontrolleinrichtung nach wenigstens einem der Ansprüche 1 bis 11, dadurch gekennzeichnet, dass das stationäre Antriebsmoment $M_{stat}$ für weitere Gänge unter Berücksichtigung der Getriebe-Übersetzung nach der Formel

$$M'_{stat} = M_{stat} \cdot \frac{i}{i\,(neu)}$$

berechnet wird mit

$M'_{stat}$ = stat. Moment im neuen Gang,
$i$ = Übersetzung im alten Gang,
$i\,(neu)$ = Übersetzung im neuen Gang.

13. Kontrolleinrichtung nach wenigstens einem der Ansprüche 1 bis 12, dadurch gekennzeichnet, dass das Ausgangssignal der Vergleichseinrichtung (45) zur Anzeige eines entsprechend den vorgegebenen Auswahlkriterien empfohlenen Ganges dient.

14. Kontrolleinrichtung nach wenigstens einem der Ansprüche 1 bis 13, dadurch gekennzeichnet, dass eine Sperreinrichtung vorgesehen ist, die das Einlegen eines neuen Ganges verhindert, wenn in der Vergleichseinrichtung (45) festgestellt wird, dass im neuen Gang das stationäre Antriebsmoment $M'_{stat}$ das optimale Antriebsmoment $M_{opt}$ um einen vorgegebenen Betrag überschreitet.

15. Kontrolleinrichtung nach wenigstens einem der Ansprüche 1 bis 14, dadurch gekennzeichnet, dass die Vergleichseinrichtung (45) so ausgebildet ist, dass für einen vorhandenen Fahrzustand zunächst diejenigen Gänge bestimmt werden, für die das optimale Antriebsmoment $M_{opt}$ grösser ist als das stationäre Antriebsmoment $M'_{stat}$ und dass dann von den so ausgewählten Gängen der bezüglich vorgegebener Auswahlkriterien günstigste Gang ausgewählt wird.

16. Kontrolleinrichtung nach wenigtens einem der Ansprüche 1 bis 15, dadurch gekennzeichnet, dass zur Ausführung der Berechnungen mindestens ein Mikrocomputer verwendet wird.

**Claims**

1. Control device for a vehicle driven by a motor by way of a transmission that preferably changes the transmission ratio in steps, which device has the following features:

a) there is provided a store (36) recording the characteristics of the motor for ascertaining the instantaneous driving torque $M_A$ delivered by the motor (6);

b) there is provided a sensor (16) registering the number of revolutions per minute $n_R$ of at least one vehicle wheel (15) of which the output signal is fed to a differentiating device for ascertaining a magnitude š of acceleration derived from the variation with time of the number of revolutions per minute of the vehicle wheel (15);

c) there is provided a weight-assessment means (30) for calculating the weight of the vehicle from the instantaneous driving torque $M_A$ and the magnitude š of acceleration;

d) there is provided a torque-control device (24) for calculating a steady torque $M_{stat}$, which is necessary for driving the vehicle without acceleration, from the instantaneous torque $M_A$, the vehicle weight G and the magnitude š of acceleration;

e) there is provided a transmission-control means (18) which serves to store or determine threshold values of optimum driving torques $M_{opt}$ which, using predetermined selection criteria, are specified as suitable for the various gears of the transmission;

f) there is provided a comparison device (45) which serves to compare the particular steady driving torque $M_{stat}$ with the optimum driving torque $M_{opt}$ of the same or a different gear.

2. Control device according to claim 1, characterised by the following features:

a) there is provided a sensor (7) registering the number of revolutions per minute $n_A$ of the motor (6);

b) there is provided a transmitter (1) for producing a motor-control magnitude y;

c) the store (36) recording the characteristics of the motor contains a family of characteristics which represents the relationship between the number of revolutions per minute $n_A$ of the motor, the motor-control magnitude y and the instantaneous torque $M_A$;

d) a singal output (35) of the store (36) recording the characteristics of the motor is connected to a signal input (27) of the torque-control device (24) associated with the instantaneous torque $M_A$.

3. Control device according to claim 2 for a vehicle with a motor (6), in the form of an internal combustion engine, which is controlled by an accelerator pedal, characterised in that the transmitter (1) is formed as an accelerator pedal.

4. Control device according to at least one of claims 1 to 3, characterised in that;

a) the weight-assessment means (30), using the instantaneous torque $M_A$ and several values of the vehicle acceleration magnitude š ascertained at different times $X_1$, $X_2$ determines a weight magnitude G corresponding to the weight of the vehicle in accordance with the formula:

$$G = \frac{M_A}{f(š_{X2}) - f(š_{X1})}$$

b) at least one of the values of the acceleration magnitude š to be used by the weight-assessment means (30) being ascertained at a point in time at which the vehicle is being driven by the motor (6), and at least one of the values of the acceleration magnitude š to be used by the weight-assessment means (30) being ascertained at a point in time at which the vehicle is not being driven by the motor.

5. Control device according to at least one of claims 1 to 4 for a vehicle with a clutch for disengaging the driven vehicle wheels from the drive line of the vehicle, characterised by the following features:

a) the clutch (9) is provided with a control input (10) for controlling the operation of the clutch;

b) the control input of the clutch (9) is connected to a control output (22) of the transmission-control means (18);

c) the transmission-control means (18) produces a control signal for disengaging the clutch (9) while the value of the acceleration magnitude š associated with the non-driven state of the vehicle is ascertained.

6) Control device according to claim 4, characterised in that the weight magnitude G is repeatedly ascertained.

7. Control device according to claim 4, characterised in that the different weight magnitudes G ascertained are used to obtain a mean value for the weight magnitude G and this mean value is used to indicate or determine the weight of the vehicle.

8. Control device according to claim 6 to 7, characterised in that means are provided that permit use only of those weight magnitudes G or of those mean values of the weight magnitudes G that do not exceed a predetermined deviation from a predetermined value or from a previously ascertained value of the weight magnitudes G.

9. Control device according to claim 6 to 8, characterised in that especially after a change in the weight of the vehicle, a fixed predetermined value of the weight magnitude G is used for the first assessment of the weight magnitudes G.

10. Control device according to at least one of claims 1 to 9, characterised in that the torque-control device (24) contains a calculating device for calculating the difference between the instantaneous driving torque $M_A$ and the product of the weight G and the acceleration magnitude š in accordance with the formula:

$$M_{stat} = MA - G \cdot f(š).$$

11. Control device according to at least one of claims 1 to 10, characterised in that the steady driving torque $M_{stat}$ is continually ascertained.

12. Control device according to at least one of claims 1 to 11, characterised in that the steady driving torque $M_{stat}$ is calculated for other gears, taking into account the transmission ratio, in accordance with the formula:

$$M'_{stat} = M_{stat} \cdot \frac{i}{i \, (new)}$$

in which

$M'_{stat}$ = steady torque in the new gear,
i = transmission ratio of the old gear,
i (new) = transmission ratio of the new gear.

13. Control device according to at least one of claims 1 to 12, characterised in that the output signal of the comparison device (45) serves to indicate a gear recommended in accordance with the predetermined selection criteria.

14. Control device according to at least one of claims 1 to 13, characterised in that a blocking device is provided which prevents the engagement of a new gear if it is dermined in the comparison device (45) that, in the new gear, the steady driving torque $M'_{stat}$ will exceed the optimum driving torque $M_{opt}$ by a predetermined amount.

15. Control device according to at least one of claims 1 to 14, characterised in that the comparison device (45) is so designed that, for the existing driving condition, those gears for which the optimum driving torque $M_{opt}$ is greater than the steady driving torque $M'_{stat}$ are first determined and then, from the gears thus selected, the gear that is most favourable as regards the predetermined selection criteria is chosen.

16. Control device according to claim 1 to 15, characterised in that at least one microcomputer is used to carry out the calculations.

**Revendications**

1. Dispositif de commmande d'un véhicule propulsé par un moteur via une transmission présentant de préférence une variation discontinue, caractérisé en ce que:

a) une mémoire (36) de réseau de caractéristiques du moteur est prévue pour la détermination du couple instantané $M_A$ délivré par le moteur (6);

b) un capteur (16) décelant la vitesse de rotation $n_R$ d'une roue (15) du véhicule au moins est prévu, dont le signal de sortie est appliqué à un différentiateur pour la détermination d'une grandeur d'accélération š dérivée de la variation temporelle de la vitesse de rotation $n_R$ de la roue (15) de véhicule;

c) un dispositif traducteur (30) est prévu pour le calcul du poids du véhicule à l'aide du couple instantané $M_A$ et de la grandeur d'accélération š;

d) un dispositif de contrôle du couple (24) est prévu pour le calcul d'un couple stationnaire $M_{stat}$ nécessaire au déplacement du véhicule sans accélération, à l'aide du couple instantané $M_A$, du poids G du véhicule et de la grandeur d'accélération š;

e) une commande (18) de la boîte de vitesses est prévue pour mémoriser ou déterminer des seuils de couples optimaux $M_{opt}$ qui sont préfixés, avec utilisation de critères de sélection prédéterminés, comme des couples appropriés pour les différentes vitesses de la boîte de vitesses; et

f) un comparateur (45) est prévu pour comparer le couple stationnaire $M_{stat}$ existant avec le couple optimal $M_{opt}$ de la même vitesse ou d'une autre vitesse.

2. Dispositif de commande selon la revendication 1, caractérisé en ce que:

a) un capteur (7) est prévu pour déceler la vitesse de rotation $n_A$ du moteur (6);

b) un transmetteur (1) est prévu pour produire une grandeur y de commande du moteur;

c) la mémoire (36) du réseau de caractéristiques du moteur contient une famille de courbes représentant la relation entre la vitesse de rotation $n_A$ du moteur, la grandeur de commande y du moteur et le couple instantané $M_A$; et

d) une sortie de signal (35) de la mémoire (36) du réseau de caractéristiques du moteur est reliée à une entrée de signal (27) coordonnée au couple instantané $M_A$ du dispositif de contrôle du couple (24).

3. Dispositif de commande selon la revendication 2, pour un véhicule équipé d'un moteur à combustion interne (6) commandé par une pédale d'accélération, ledit dispositif étant caractérisé en ce que le transmetteur (1) est réalisé sous forme d'une pédale d'accélération.

4. Dispositif de commande selon au moins une des revendications 1 à 3, caractérisé en ce que:

a) le dispositif traducteur (30) détermine, à l'aide du couple instantané $M_A$ et de valeurs de la grandeur d'accélération š du véhicule déterminées à des instants différents $X_1$, $X_2$, une grandeur de poids G correspondant au poids du véhicule selon la formule:

$$G = \frac{M_A}{f(š_{X2}) - f(š_{X1})}$$

et

b) une au moins des valeurs de la grandeur d'accélération š à traduire par le dispositif (30) est déterminée à un instant où le véhicule est propulsé par le moteur (6), et une au moins des valeurs de la grandeur d'accélération š à traduire par le dispositif (30) est déterminée à un instant où le véhicule n'est pas propulsé.

5. Dispositif de commande selon au moins une des revendication 1 à 4, destiné à un véhicule équipé d'un embrayage isolant des roues motrices de la chaîne cinématique et caractérisé en ce que:

a) l'embrayage (9) est muni d'une entrée (10) pour la commande de son actionnement;

b) l'entrée de commande (10) de l'embrayage (9) est reliée à une sortie de commande (22) de la commande (18) de la boîte de vitesse; et

c) la commande (18) de la boîte de vitesses produit un signal de commande pour l'isolement de l'embrayage (9) quand la valeur de la grandeur d'accélération š affectée à l'état non propulsé du véhicule est déterminée.

6. Dispositif de commande selon la revendication 4, caractérisé en ce que la détermination de la grandeur de poids G est répétée.

7. Dispositif de commande selon la revendication 6, caractérisé en ce que diverses grandeurs de poids G déterminées sont utilisées pour la formation d'une valeur moyenne de la grandeur de poids G, et cette valeur moyenne est utilisée pour l'indication ou la détermination du poids du véhicule.

8. Dispositif de commande selon les revendications 6 et 7, caractérisé par des moyens qui provoquent uniquement la traduction des grandeurs de poids G ou de valeurs moyennes de ces dernières ne dépassant pas une valeur prédéterminée ou une valeur précédemment déterminée des grandeur de poids G.

9. Dispositif de commande selon les revendications 6 à 8, caractérisé en ce qu'une valeur prédéterminée fixe de la grandeur de poids G est utilisée pour la première détermination de la grandeur de poids G, en particulier après une variation du poids du véhicule.

10. Dispositif de commande selon au moins une des revendications 1 à 9, caractérisé en ce que le dispositif de contrôle du couple (24) comprend un dispositif de calcul de la différence entre le couple instantané $M_A$ et le produit du poids G par la grandeur d'accélération š selon la formule:

$$M_{stat} = MA - G \cdot f(s)$$

11. Dispositif de commande selon au moins une des revendications 1 à 10, caractérisé par une détermination permanente du couple stationnaire $M_{stat}$.

12. Dispositif de commande selon au moins une des revendications 1 à 11, caractérisé en ce que le couple stationnaire $M_{stat}$ est calculé pour d'autres vitesses, compte tenu du rapport de la boîte, selon la formule:

$$M'_{stat} = M_{stat} \cdot \frac{i}{i \text{ (nouveau)}}$$

avec
$M'_{stat}$ = couple stationnaire à la nouvelle vitesse

$i$ = rapport à l'ancienne vitesse
$i$ (nouveau) = rapport à la nouvelle vitesse.

13. Dispositif de commande selon au moins une des revendications 1 à 12, caractérisé en ce que le signal de sortie du comparateur (45) sert à l'indication d'une vitesse recommandée selon les critéres de sélection prédéterminés.

14. Dispositif de commande selon au moins une des revendications 1 à 13, caractérisé en ce qu'il comporte un dispositif de blocage qui empêche l'enclenchement d'une nouvelle vitesse lorsqu'il est constaté dans le comparateur (45) qu'à la nouvelle vitesse le couple stationnaire $M'_{stat}$ dépasse le couple optimal $M_{opt}$ d'une quantité préfixée.

15. Dispositif de commande selon au moins une des revendications 1à 14, caractérisé en ce que le comparateur (45) est réalisé de manière que, pour un état de roulement existant, les vitesses pour lesquelles le couple optimal $M_{opt}$ est supérieur au couple stationnaire $M'_{stat}$ soient déterminées d'abord et que, ensuite, la vitesse la plus favorable, selon des critères de sélection prédéterminés, soit choisie parmi les vitesses ainsi sélectées.

16. Dispositif de commande selon les revendications 1 à 22, caractérisé par l'utilisation d'au moins un micro-ordinateur pour effectuer les calculs.

0 126 201

$$G \sim \frac{M_A}{f(S_{X2}) - f(S_{X1})}$$

Gewichtsermittlung

Motor-Kennlinienfeld

Momenten-kontrolleinrichtung
$M_{stat} \sim M_A - G \cdot f(S)$

Getriebesteuerung
$M'_{stat} \leq M_{opt}$

Motor

Kupplung

Getriebe

Rad